(19) Europäisches Patentamt
European Patent Office
Office européen des brevets

(11) EP 0 631 059 B1

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(51) Int Cl.[6]: **F16C 32/06**, F16C 13/04

(21) Anmeldenummer: **94107274.6**

(22) Anmeldetag: **10.05.1994**

(54) **Lager für eine beheizte Walze**

Bearing for a heated drum

Palier pour un rouleau chauffé

(84) Benannte Vertragsstaaten:
**BE FR IT NL SE**

(30) Priorität: **14.06.1993 DE 4319579**

(43) Veröffentlichungstag der Anmeldung:
**28.12.1994 Patentblatt 1994/52**

(73) Patentinhaber: **Voith Sulzer Finishing GmbH**
**47803 Krefeld (DE)**

(72) Erfinder:
- **van Haag, Rolf, Dr.**
  **D-47647 Kerken (DE)**
- **Junk, Dieter**
  **D-57223 Kreuztal (DE)**
- **Stein, Heinrich**
  **D-41063 Mönchengladbach (DE)**

(74) Vertreter: **Knoblauch, Ulrich, Dr.-Ing.**
**Patentanwälte Dr. Knoblauch,**
**Kühhornshofweg 10**
**60320 Frankfurt (DE)**

(56) Entgegenhaltungen:

| | |
|---|---|
| **EP-B- 0 158 051** | **CA-A- 1 185 681** |
| **DE-B- 1 253 523** | **DE-B- 1 262 686** |
| **GB-A- 971 257** | **GB-A- 2 029 932** |

EP 0 631 059 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Lager für eine beheizte Walze eines Kalanders, mit veränderlichem Durchmesserunterschied zwischen feststehender und rotierender Lauffläche, wobei die rotierende Lauffläche durch einen Lagerring gebildet ist.

Das bevorzugte Anwendungsgebiet sind Kompaktkalander, bei denen bisher Wälzlager für die beheizten Walzen verwendet werden. Diese Wälzlagerung stößt in Verbindung mit der durch die Anwendung neuer Walzenwerkstoffe erreichten Verringerung der Walzendurchmesser an ihre Grenzen. Um eine Wälzlagerung mit ausreichender Lebensdauer zu erhalten, müssen die Lager so groß dimensioniert werden, daß die Außenabmessungen der Lagergehäuse zum Walzspalt hin über den Walzendurchmesser hinausgehen und damit den Bauraum der Gegenwalzenlager einschränken. Dies ist zum Beispiel für eine äquidistante Außenlagerung des Mantels einer Durchbiegungs-Ausgleichswalze inakzeptabel.

Die EP-B-0 158 051 betrifft ein Lager für eine Waschtrommel, die mit einem zu waschenden Gut und kalten oder heißem Wasser beschickt wird, mit veränderlichem Durchmesserunterschied zwischen feststehender und rotierender Lauffläche, wobei die rotierende Lauffläche durch den als Lagerring dienenden Trommelmantel gebildet ist. Ein Abschnitt der feststehenden Lauffläche ist durch ein erstes hydrostatisches Lagersegment mit wenigstens einer von Öl durchströmten Lagertasche auf seiten des Laufspaltes gebildet. Im gegenüberliegenden Umfangsbereich ist ein weiterer Abschnitt der feststehenden Lauffläche durch zwei weitere hydrostatische Lagersegmente mit ebenfalls von Öl durchströmten Lagertaschen auf seiten des Laufspaltes gebildet. Jedes der drei Lagersegmente ist zwecks Zentrierung und Ausgleichs von Durchmesserdifferenzen radial sowohl nachgiebig als auch nachstellbar.

Der Erfindung liegt die Aufgabe zugrunde, ein Lager der eingangs genannten Art anzugeben, das einen kompakteren Aufbau aufweist.

Erfindungsgemäß ist diese Aufgabe dadurch gelöst, daß ein Abschnitt der feststehenden Lauffläche durch wenigstens ein erstes radial fixiertes hydrostatisches Lagersegment mit wenigstens einer von Öl durchströmten Lagertasche auf seiten des Laufspaltes im Umfangsbereich der resultierenden Lagerbelastung gebildet ist und im gegenüberliegenden Umfangsbereich ein weiterer Abschnitt der feststehenden Lauffläche durch wenigstens ein zweites hydrostatisches Lagersegment mit radial nachstellbarem, eine von Öl durchströmte Lagertasche auf seiten des Laufspaltes aufweisenden Lagerschuh gebildet ist und daß der Laufspalt in einer radialen und 99 f. axialen Mittelebene der bzw. jeder Lagertasche des ersten Lagersegments zu Beginn der Erwärmung kleiner und im erwärmten Zustand der Walze größer als am Rande der Lagertasche ist.

Eine hydrostatische Lagerung hat neben dem kompakteren Aufbau eine höhere Verschleißfestigkeit und bessere Dämpfung als ein Wälzlager. Hierbei dient das radial fixierte Lagersegment der Zentrierung und der radial nachstellbare Lagerschuh des zweiten hydrostatischen Lagersegments der Ausbildung der erforderlichen Mindestvorspannung bei ölvolumenstromminimierter Kompensation von - z.B. thermisch bedingten - über den Arbeitsbereich auch schwankenden Durchmesserdifferenzen zwischen Lagerinnen- und -außenteilen. Die erforderliche Mindestvorspannung schließt die Wirkrichtung des Walzeneigengewichts mit ein.

Vorzugsweise sind die Laufflächen sphärisch. Diese Ausbildung ermöglicht eine sichere Aufnahme von Axialkräften, analog einem herkömmlichen Pendelrollenlager.

Sodann ist es günstig, wenn jeder Lagertasche des ersten Lagersegments ein konstanter Ölvolumenstrom und der Lagertasche des zweiten Lagersegments ein konstanter Öldruck zuführbar ist.

Die Ölzuteilungen können über bekannte Drosselsysteme, Mengenteiler oder Einzelpumpen und für den radial beweglichen Lagerschuh über Druckregelventile erfolgen.

Vorzugsweise ist dafür gesorgt, daß der Lagerschuh des zweiten Lagersegments auf seiner dem Laufspalt abgekehrten Seite eine weitere von Öl durchströmte Lagertasche aufweist und mit dieser an dem beweglichen Teil einer Kolben-Zylinder-Anordnung anliegt. Auf diese Weise ist der oder jeder Lagerschuh auch relativ zu dem beweglichen Teil der Kolben-Zylinder-Anordnung gleitend verschiebbar und damit praktisch reibungsfrei selbstzentrierend relativ zu dem mit dem Lagerzapfen der Walze rotierenden Lagerring und damit auch zu dem oder den gegenüberliegenden radial fixierten Lagersegment(en).

Sodann kann dafür gesorgt sein, daß das erste Lagersegment auf der dem Laufspalt abgekehrten Seite wenigstens eine weitere von Öl durchströmte Lagertasche aufweist und axial verschiebbar ist. Auf diese Weise ist die Ausbildung eines Loslagers am einen Ende der Walze zur praktisch reibungsfreien Axialverschiebung des Lagers infolge thermischer Längsausdehnung der Walze möglich.

Die Erfindung und ihre Weiterbildungen werden nachstehend anhand der Zeichnungen näher beschrieben. Es zeigen:

Fig. 1 eine axiale Ansicht eines fiktiven in Umfangsrichtung geschlossenen hydrostatischen Mehrkammerlagers mit dem darin gelagerten Lagerzapfen einer Walze,

Fig. 2 einen Ausschnitt eines ersten Ausführungsbeispiels eines erfindungsgemäßen hydrostatischen Lagers im Anfahrzustand, in dem die Temperaturdifferenz zwischen dem feststehenden äußeren und dem rotierenden inneren Lagerteil Null ist,

Fig. 3 die gleiche Ansicht wie die nach Fig. 2, jedoch im Betriebszustand bei maximaler Betriebstemperatur,

Fig. 4 einen Ausschnitt des Lagers nach den Fig. 2 und 3 in axialer Ansicht der beiden relativ zueinander rotierenden Lagerteile und in Draufsicht auf eine Lagertasche des feststehenden Lagerteils zur Erläuterung der Berechnung einer fiktiven Spalthöhe bei konzentrischen Lagerflächen,

Fig. 5 eine Axialansicht eines weiteren Ausführungsbeispiels eines erfindungsgemäßen Lagers, teilweise im Schnitt,

Fig. 6 den Schnitt VI-VI der Fig. 5,

Fig. 7 ein drittes Ausführungsbeispiel eines erfindungsgemäßen Lagers in Axialansicht, teilweise im Schnitt, und

Fig. 8 den Schnitt VIII-VIII der Fig. 7.

Das fiktive Lager nach Fig. 1 dient zur Lagerung einer beheizten Walze eines Kompaktkalanders. Die Beheizung erfolgt durch Zuführung eines auf z.B. 275°C erwärmten Heizmediums durch eine Bohrung 1 im Lagerzapfen 2 der Walze, wobei die Bohrung 1 mit einer Isolation 3 ausgekleidet ist. Den Lagerzapfen 2 umgibt ein Lagerring 4, der durch einen Keil 5 drehfest mit dem Lagerzapfen 2 verbunden ist. Ein weiterer Lagerring 6 umgibt den Lagerring 4 und ist im Lagergehäuse 7 drehfest gelagert. Das Lagergehäuse 7 ist seinerseits von einer Außenisolation 8 umgeben. Zwischen den Lagerringen 4 und 6 befindet sich der Laufspalt 9, dem auf nicht dargestellte Weise Öl zugeführt wird, so daß sich eine hydrostatische Lagerung ergibt, wobei die Lagerringe 4 und 6 ein in Umfangsrichtung geschlossenes hydrostatisches Mehrkammerlager symbolisieren sollen, bei dem die Höhe des Laufspaltes trotz der Isolationen 3 und 8 und damit die hydrostatische Spalthöhe (und Exzentrizitäten) so stark schwanken können, daß ökonomisch unvertretbare Ölvolumenströme zu erwarten sind. Z.B. kann sich bei einer Temperatur $\vartheta$ des Heizmediums von etwa 275°C eine mittlere Temperatur $\vartheta_{mi}$ der Lagerinnenteile von etwa 140°C, eine Laufspalttemperatur von etwa 130°C und eine mittlere Temperatur $\vartheta_{ma}$ der Lageraußenteile von etwa 110°C und mithin eine Temperaturdifferenz von $\Delta\vartheta \sim 30°C$ ergeben. Beispielsweise bei einem mittleren Lagerdurchmesser von D = 900 mm ergäbe sich dann mit der Temperaturdifferenz von $\Delta\vartheta = 30°C$ zwischen Lagerinnen- und -außenteilen eine Durchmesseränderung $\Delta D$ von ungefähr 320 µm. Ohne die Isolationen 3 und 8 wäre sogar mit $\Delta D \approx 1$ mm zu rechnen.

Geht man z.B. von 80 µm mittlerer Spalthöhe bei der maximalen Betriebstemperatur aus, so müssen im Anfahrtszustand (Temperaturgleichheit von Lagerinnen- und -außenteilen) 80 µm + 1/2 x 320 µm = 240 µm als mittlere Spalthöhe zugrunde gelegt werden.

Da der Ölvolumenstrom nach Hagen-Poiseuille der dritten Potenz der Spalthöhe proportional ist, ist der Ölvolumenstrom im Anfahrtszustand $(240/80)^3 = 27$ mal größer als im Fall von 80 µm Spalthöhe.

Wird im Gegensatz zum bisher angenommenen geschlossenen Lagerring auf der Belastungsseite nur ein Lagersegment 10 zugrunde gelegt, das etwa ein Viertel des Umfanges einnimmt, so lassen sich im vorstehenden Beispiel die Fertigungsmaße so wählen, daß sich unter gezielter Ausmittelung von Plus- und Minus-Abweichungen vom konzentrischen Spalt zum Beispiel die in Fig. 2 für den Anfahrtszustand (O) und in Fig. 3 für den Betriebszustand bei maximaler Temperatur $\vartheta_{max}$ dargestellten Verhältnisse einstellen, wobei die Indizes der in den Fig. 2 und 3 eingetragenen Größen folgende Bedeutungen haben: M = Mitte; Z = Zapfen; R = Rand; B = Bohrung.

Dies sei nachstehend unter Bezugnahme auf Fig. 4 näher erläutert, in der das einzige Lagersegment 10 nur zur Hälfte dargestellt ist und eine mit Öl unter Druck beaufschlagte Lagertasche 11 aufweist. Ferner ist für das Rechenmodell eine zylindrische Lagerform angenommen.

Aufgrund der veränderlichen Temperaturdifferenzen $\Delta\vartheta$ zwischen Lagerinnen- und -außenteilen kann es wegen der thermisch bedingten Radienänderungen nur einen einzigen Betriebspunkt mit konzentrischem Ölspalt geben.

Aus Gründen der Funktionssicherheit und der Minimierung des Ölvolumenstromes ist es sinnvoll, diesen Idealpunkt zwischen Anfahrzustand (0) und Betriebszustand ($\vartheta_{max}$) bei maximaler Betriebstemperatur etwa im oberen Drittel des Arbeitsbereiches vorzusehen, so daß z.B. die Spaltabweichung ($h_{M\vartheta max}$ -$h_{R\vartheta max}$) weniger als die Hälfte von ($h_{R_o}$ -$h_{M_o}$) beträgt.

In der Grundformel nach Hagen-Poiseuille (Zeitschrift "fluid", April 1973, Seite 116) zur Berechnung des Ölvolumenstromes Q:

$$Q = \frac{\Delta Pbh^3}{12\eta l} \quad (0)$$

entspricht h im Fall des realen Spaltes mit veränderlicher Spalthöhe der rechnerischen Spalthöhe $h_{rechn.}$ bei konzentrischen Lagerflächen, nachstehend fiktive konzentrische Spalthöhe genannt.

Werden die Druckdifferenz $\Delta P$, die dynamische Ölzähigkeit $\eta$, der Faktor 12 und die Überströmlänge 1 zur Konstanten K zusammengefaßt, so gilt

$$Q = K\,b\,h^3_{rechn.} \quad (1)$$

(b = gesamte Überströmbreite).

Mit den Parametern gemäß Fig. 4 gelten dann folgende mathematische Ableitungen:

Partieller Ölvolumenstrom an der Stelle $\varphi$:

$$dQ = K\frac{1}{2}(R_Z+R_B)\,d\varphi\cdot h_\varphi^3\,; \qquad \left(\frac{1}{2}(R_Z+R_B)\,d\varphi \triangleq db\right)$$

$$Q = 4\int_0^{\varphi_R} dQ + Kb_2h_R^3; \quad 4\int_0^{\varphi_R} dQ = 2(R_Z+R_B)K\int_0^{\varphi_R} h_\varphi^3\,d\varphi; \qquad \left[2(R_Z+R_B) = \frac{b_1}{\varphi_R}\right]$$

$$Q = K\left[\frac{b_1}{\varphi_R}\int_0^{\varphi_R} h_\varphi^3\,d\varphi + b_2h_R^3\right]; \qquad (b = b_1+b_2)$$

$$Q = K(b_1+b_2)h^3_{rechn.}; \qquad (\triangleq \text{Gleichung}(1))$$

$$h_{rechn.} = \sqrt[3]{\frac{\frac{b_1}{\varphi_R}\int_0^{\varphi_R} h_\varphi^3\,d\varphi + b_2h_R^3}{b_1 + b_2}} \quad (2)$$

Der Cosinussatz ergibt für das in Fig. 4 schraffierte Dreieck:

$$h_\varphi = R_B - (R_B-R_Z-h_M)\cos\varphi - \sqrt{R^2_Z-(R_B-R_Z-h_M)^2(1-\cos^2\varphi)}$$

Da der Ausdruck: $(R_B-R_z-h_M)^2(1-\cos^2\varphi)$ im Vergleich zu $R^2_Z$ vernachlässigbar klein ist, gilt als brauchbare Vereinfachung:

$$h_\varphi = (R_B-R_Z) - (R_B-R_Z-h_M)\cos\varphi \quad (3)$$

Die Integration ist damit ohne Iteration möglich und ergibt:

$$\int_0^{\varphi_R} h_\varphi^3 d\varphi = \varphi_R (R_B-R_Z)^3 - 3(R_B-R_Z)^2 (R_B-R_Z-h_M)\sin\varphi_R + \frac{3}{2}(R_B-R_Z)(R_B-R_Z-h_M)^2(\varphi_R+\sin\varphi_R\cos\varphi_R) - \frac{1}{3}(R_B-R_Z-h_M)^3(\sin\varphi_R\cos^2\varphi_R+2\sin\varphi_R) \quad (4)$$

Die Ergebnisgleichungen dieser Ableitung des Falles $h_M<h_R$ sind auch für den umgekehrten Fall $h_M>h_R$ gültig (automatische Regelung über die Vorzeichen).

Es wird unterstellt, daß die sphärische Lagerform im Rechenmodell durch eine zylindrische Form mit entsprechendem mittleren Durchmesser angenähert werden kann.

Mit a als linearem thermischen Ausdehnungskoeffizienten der Lagerbauteile gilt:

$$R_{B_{\vartheta_{max}}} = R_{B_0}\left(1+\alpha(\vartheta_{m_a}-20)\right) \quad (5)$$

$$R_{Z_{\vartheta_{max}}} = R_{Z_0}\left(1+\alpha(\vartheta_{m_i}-20)\right) \quad (6)$$

Für die Praxis ist es sinnvoll, die Mindestspalthöhen $h_{Mo}$ und $h_{R\vartheta max}$, den mittleren Durchmesser der Lagerbohrung bei Raumtemperatur Dm bzw. $R_{Bo}$ = 1/2 Dm und den Faktor F, um den die Ölspaltdifferenz ($h_{M\vartheta max}$ - $h_{R\vartheta max}$) kleiner sein soll als die Ölspaltdifferenz ($h_{Ro}$ - $h_{Mo}$), vorzugeben.

Aus den Gleichungen (3), (5) und (6) läßt sich eine Funktion für den Zapfenradius $R_{Zo}$ ableiten: (auf die Wiedergabe der Ableitung sei verzichtet).

$$R_{Z_0} = \frac{R_{B_0}-h_{M_0}+\frac{F}{\cos\varphi_R}\left(R_{B_0}\left(1+\alpha(\vartheta_{m_a}-20)\right) - h_{R_{\vartheta_{max}}}\right)}{1+\frac{F}{\cos\varphi_R}\left(1+\alpha(\vartheta_{m_i}-20)\right)} \quad (7)$$

Für die Ermittlung von $h_{M\vartheta max}$ ist die Gleichung (3) nur umzustellen:

$$h_{M_{\vartheta_{max}}} = \frac{1}{\cos\varphi_R}\left(h_{R_{\vartheta_{max}}} - (1-\cos\varphi_R)(R_{B_{\vartheta_{max}}}-R_{Z_{\vartheta_{max}}})\right) \quad (8)$$

Damit sind alle Parameter zur Bestimmung der fiktiven konzentrischen Spalthöhen $h_{rechn.}$ (2) bzw. der Ölvolumenströme Q (1) gegeben.

<u>Zahlenbeispiel:</u>

Mittlerer Durchmesser

der Lagerbohrung $D_m$ = Mittelwert von 900 H 7 $D_m$ = 900,045 mm

→ $R_{B0}$ = 450,0225 mm
$\varphi_R$ = 45°
$h_{M0}$ = 0,070 mm bzw. 70µm
$h_{R\vartheta max}$ = 0,070 mm bzw. 70µm

$\alpha = 12 \cdot 10^{-6} (1/°C)$
$\vartheta_{m_a} = 110°C$
$\vartheta_{m_i} = 140°C$
$F = 2{,}25$, d. h. $= h_{M_{\vartheta max}} - h_{R_{\vartheta max}} = \frac{1}{2{,}25} (h_{R_0} - h_{M_0})$

Ergebnisse:

| | |
|---|---|
| Gleichung (7): | $R_{Zo} = 449{,}8294$ mm |
| Gleichung (3): | $h_{Ro} = 0{,}106$ mm bzw. 106 µm, $\Delta h = 36$ µm |
| Gleichung (5): | $R_{B\vartheta max} = 450{,}5085$ mm Probe: |
| Gleichung (6): | $R_{Z\vartheta max} = 450{,}4772$ mm $36 = 2{,}25 \cdot 16$ |
| Gleichung (8): | $h_{M\vartheta max} = 0{,}086$ mm bzw. 86 µm, $\Delta h = 16$ µm |
| Gleichung (4): | |

$$\int_0^{\varphi_z} h^3_{\varphi_0} d\varphi = 4{,}6061 \cdot 10^{-4}\ mm^3$$

"

$$\int_0^{\varphi_z} h^3_{\varphi_{\vartheta_{max}}} d\varphi = 4{,}1476 \cdot 10^{-4}\ mm^3$$

Aus Fig. 4 folgt:

$b_1 = 2\vartheta_R (R_B + R_Z)$
$b_{1o} = 1413{,}4841$ mm
$b_{1\vartheta max} = 1415{,}2650$ mm
$b_{2o} = 375$ mm (konstruktive Festlegung)
$b_{2\vartheta max} = 375{,}4725$ mm

Gleichung (2):

$$h_{rechn._0} = 0{,}0893 \text{ mm bzw. } 89{,}3\ \mu m$$

$$h_{rechn._{\vartheta max}} = 0{,}0788 \text{ mm bzw. } 78{,}8\ \mu m$$

Auf den Anfahrtszustand bezogen, verringert sich mithin der Ölvolumenstrom um den Faktor $(240/89{,}3)^3 = 19{,}4$ und, auf den Betriebszustand bei maximaler Temperatur bezogen, um den Faktor $(240/78{,}8)^3 = 28{,}3$ gegenüber einem über den gesamten Umfang geschlossenen hydrostatischen Lager bei Annahme eines konzentrischen Laufspaltes. Die beheizten Walzen von Kompaktkalandern weisen zwar eine nahezu konstante resultierende Lastrichtung aus statischen und dynamischen Einflüssen auf und gestatten damit grundsätzlich eine unsymmetrische Bauweise des Lagers, bei der nur ein radial fixiertes hydrostatisches Lagersegment 10 mit nur einer von Öl durchströmten Lagertasche 11 auf seiten des Laufspaltes 9 im Umfangsbereich der resultierenden Lagerbelastung gebildet ist, wie es in Fig. 2 und 3 angedeutet ist. Zusätzlich ist jedoch im gegenüberliegenden Umfangsbereich ein weiterer Abschnitt der feststehenden Lauffläche durch zwei weitere hydrostatische Lagersegmente 12 mit jeweils einem radial nachstellbaren, eine von Öl durchströmte Lagertasche 13 auf seiten des Laufspaltes 9 aufweisenden Lagerschuh 14 gebildet, wie es in Fig. 5 dargestellt ist. Dem radial fixierten Lagersegment 10 kommt hierbei die Aufgabe der Zentrierung und den radial beweglichen Lagersegmenten 12 die Aufgabe zu, die erforderliche Mindestvorspannung bei ölvolumenstromminimierter Kompensation von - z.B. thermisch bedingten - über den Arbeitsbereich auch schwankenden Durchmesserdifferenzen zwischen Lager innen- und -außenteilen zu bewirken. Die erforderliche Mindestvorspannung schließt hierbei die Berücksichtigung der Wirkrichtung des Walzeneigengewichtes mit ein.
Die Nachstellung oder Nachführung der als Nebenlager wirkenden Lagersegmente 12 erfolgt hydraulisch

über Kolben 15 und Zylinder 16, kann aber auch mechanisch erfolgen.

Die Lagertaschen 13 sind über jeweils eine in ihrem Boden ausgebildete Bohrung 17 mit einer zur Gleitfläche der Lagerschuhe 14 flächengleichen (oder auch gezielt abweichenden) hydrostatischen Lagertasche 18 verbunden, die ihrerseits über eine im Boden des angrenzenden Zylinders 16 ausgebildete Bohrung 19 mit dem Druckraum 20 der Kolben-Zylinder-Anordnung 15, 16 verbunden ist. Über eine Leitung 21 wird den Lagertaschen 13, 18 und dem Druckraum 20 Öl mit konstantem Druck, z.B. über ein Druckregelventil, zugeführt.

Die Lagerschuhe 14 wirken daher praktisch reibungsfrei selbstzentrierend relativ zu dem mit dem Lagerzapfen 2 rotierenden Lagerring 4 und dem gegenüberliegenden radial fixierten Lagersegment 10, das im folgenden Hauptlager genannt wird. Der Lagerring 4 ist als Lagerkalotte ausgebildet, so daß sich ein sphärisches Lager mit sphärischen Gleitflächen ergibt.

Das Lagersegment 10 nach Fig. 5 ist axial feststehend im Lagergehäuse 7 montiert, so daß das gesamte Lager nach den Fig. 5 und 6 als Festlager am einen Ende der Walze wirkt. Ferner hat das Lagersegment 10 bei dem Festlager nach den Fig. 5 und 6 zwei Lagertaschen 11 bei denen die Spalthöhe insgesamt wie bei dem Ausführungsbeispiel nach den Fig. 2 bis 4 gewählt ist, so daß sie hinsichtlich der Spalthöhe wie nur eine Lagertasche gemäß dem Ausführungsbeispiel nach den Fig. 2 bis 4 wirken.

Den Lagertaschen 11 werden über Leitungen 22 (Fig. 6) konstante Ölvolumenströme zugeführt, wobei die Ölzuteilung über Drosseln 23, Mengenteiler oder Einzelpumpen zu den Lagertaschen 11 erfolgen kann.

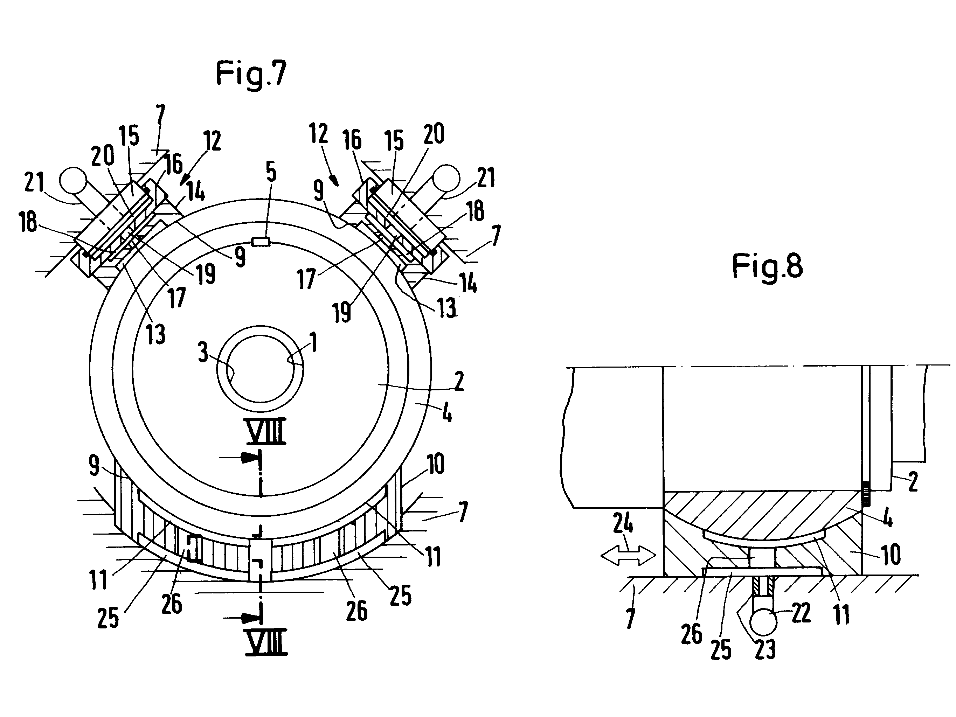

Die Fig. 7 und 8 stellen ein Loslager dar, das am anderen Ende der Walze zum Ausgleich thermischer Längsausdehnungen axial in Richtung des Doppelpfeils 24 gleitend verschiebbar ist. Zu diesem Zweck hat das Lagersegment 10 auf der dem Laufspalt 9 abgekehrten Seite ebenfalls zwei von Öl durchströmte Lagertaschen 25, die mit den Lagertaschen 11 über jeweils eine Bohrung 26 in Verbindung stehen.

Die Lagertaschen 18 auf seiten der Lagersegmente 12 und die Lagertaschen 25 auf seiten des Lagersegments 10 führen zwar zu einem beidseitigen Ölabfluß und damit zu einer Verdoppelung der Ölvolumenströme, im Vergleich zu einer in Umfangsrichtung geschlossenen hydrostatischen Lagerung gemäß Fig. 1 jedoch immer noch zu einer Verminderung des Ölvolumenstroms um einen Faktor von wenigstens 4,5 bei höherer Auslegungssicherheit.

## Patentansprüche

1. Lager für eine beheizte Walze eines Kalanders, mit veränderlichem Durchmesserunterschied zwischen feststehender und rotierender Lauffläche, wobei die rotierende Lauffläche durch einen Lagerring (4) gebildet ist, dadurch gekennzeichnet, daß ein Abschnitt der feststehenden Lauffläche durch wenigstens ein erstes radial fixiertes hydrostatisches Lagersegment (10) mit wenigstens einer von Öl durchströmten Lagertasche (11) auf seiten des Laufspaltes (9) im Umfangsbereich der resultierenden Lagerbelastung gebildet ist und im gegenüberliegenden Umfangsbereich ein weiterer Abschnitt der feststehenden Lauffläche durch wenigstens ein zweites hydrostatisches Lagersegment (12) mit radial nachstellbarem, eine von Öl durchströmte Lagertasche (13) auf seiten des Laufspaltes (9) aufweisenden Lagerschuh (14) gebildet ist und daß der Laufspalt (9) in einer radialen und 99 f. axialen Mittelebene der bzw. jeder Lagertasche (11) des ersten Lagersegments (10) zu Beginn der Erwärmung kleiner und im erwärmten Zustand der Walze größer als am Rande der Lagertasche (11) ist.

2. Lager nach Anspruch 1, dadurch gekennzeichnet, daß die Laufflächen sphärisch sind.

3. Lager nach Anspruch 1 oder 2, dadurch gekennzeichnet, daß jeder Lagertasche (11) des ersten Lagersegments (10) ein konstanter Ölvolumenstrom und der Lagertasche (13) des zweiten Lagersegments (12) ein konstanter Öldruck zuführbar ist.

4. Lager nach einem der Ansprüche 1 bis 3, dadurch gekennzeichnet, daß der Lagerschuh (14) des zweiten Lagersegments (12) auf seiner dem Laufspalt (9) abgekehrten Seite eine weitere von Öl durchströmte Lagertasche (18) aufweist und mit dieser an dem beweglichen Teil (16) einer Kolben-Zylinder-Anordnung (15, 16) anliegt.

5. Lager nach einem der Ansprüche 1 bis 4, dadurch gekennzeichnet, daß das erste Lagersegment (10) auf der dem Laufspalt (9) abgekehrten Seite wenigstens eine weitere von Öl durchströmte Lagertasche (25) aufweist und axial verschiebbar ist.

## Claims

1. Bearing for a heated roll of a calender, with variable difference in diameter between stationary and rotating running

surface, the rotating running surface being formed by a bearing ring (4), characterised in that a section of the stationary running surface is formed by at least one first radially fixed hydrostatic bearing segment (10) with at least one bearing pocket (11) through which oil flows on the side of the running gap (9) in the circumferential region of the resulting bearing load, and in the opposite circumferential region a further section of the stationary running surface is formed by at least one second hydrostatic bearing segment (12) with a radially readjustable bearing block (14) comprising a bearing pocket (13) through which oil flows on the side of the running gap (9), and in that the running gap (9) in a radial and if occasion arises axial centre plane of the or each bearing pocket (11) of the first bearing segment (10) is smaller at the beginning of heating and larger in the heated state of the roll than at the edge of the bearing pocket (11).

**2.** Bearing according to claim 1, characterised in that the running surfaces are spherical.

**3.** Bearing according to claim 1 or 2, characterised in that a constant oil volume stream can be supplied to each bearing pocket (11) of the first bearing segment (10) and a constant oil pressure can be supplied to the bearing pocket (13) of the second bearing segment (12).

**4.** Bearing according to any of claims 1 to 3, characterised in that the bearing block (14) of the second bearing segment (12) on its side facing away from the running gap (9) comprises a further bearing pocket (18) through which oil flows and abuts by this pocket against the moving part (16) of a piston and cylinder assembly (15, 16).

**5.** Bearing according to any of claims 1 to 4, characterised in that the first bearing segment (10) on the side facing away from the running gap (9) comprises at least one further bearing pocket (25) through which oil flows and is axially slidable.

**Revendications**

**1.** Palier pour un cylindre chauffé d'une calandreuse, dont la différence entre le diamètre de la surface de glissement fixe et la surface de glissement tournante est variable, la surface de glissement tournante étant formée par un anneau de palier (4), caractérisé en ce qu'une partie de la surface de glissement fixe est formée par au moins un premier segment de palier hydrostatique (10) fixé radialement, comportant dans la partie du périmètre où la contrainte résultante s'exerce sur le palier au moins une poche de palier (11) traversée par de l'huile du côté de l'interstice de glissement (9), et dans la partie opposée du périmètre, une deuxième partie de la surface de glissement fixe est formée par au moins un deuxième segment de palier hydrostatique (12) présentant un sabot de palier (14) ajustable radialement et présentant du côté de l'interstice de glissement (9) une poche de palier (13) traversée par de l'huile, et en ce que dans un plan central radial et éventuellement axial de la ou des poches de palier (11) du premier segment de palier (10), l'interstice de glissement (9) est plus petit que sur le bord de la poche de palier (11) au début du réchauffement et plus grand lorsque le cylindre est chaud.

**2.** Palier selon la revendication 1, caractérisé en ce que les surfaces de glissement sont sphériques.

**3.** Palier selon les revendications 1 ou 2, caractérisé en ce qu'un débit constant d'huile peut être amené à chaque poche de palier (11) du premier segment de palier (10), et une pression d'huile constante peut être appliquée sur la poche de palier (13) du deuxième segment de palier (12).

**4.** Palier selon l'une des revendications 1 à 3, caractérisé en ce que sur son côté non tourné vers l'interstice de glissement (9), le sabot de palier (14) du deuxième segment de palier (12) présente une autre poche de palier (18) traversée par de l'huile, et repose par cette dernière sur la partie mobile (16) d'un agencement (15, 16) à piston et cylindre.

**5.** Palier selon l'une des revendications 1 à 4, caractérisé en ce que sur son côté non tourné vers l'interstice de glissement (9), le premier segment de palier (10) présente au moins une autre poche de palier (25) traversée par de l'huile et peut coulisser axialement.

Fig.1

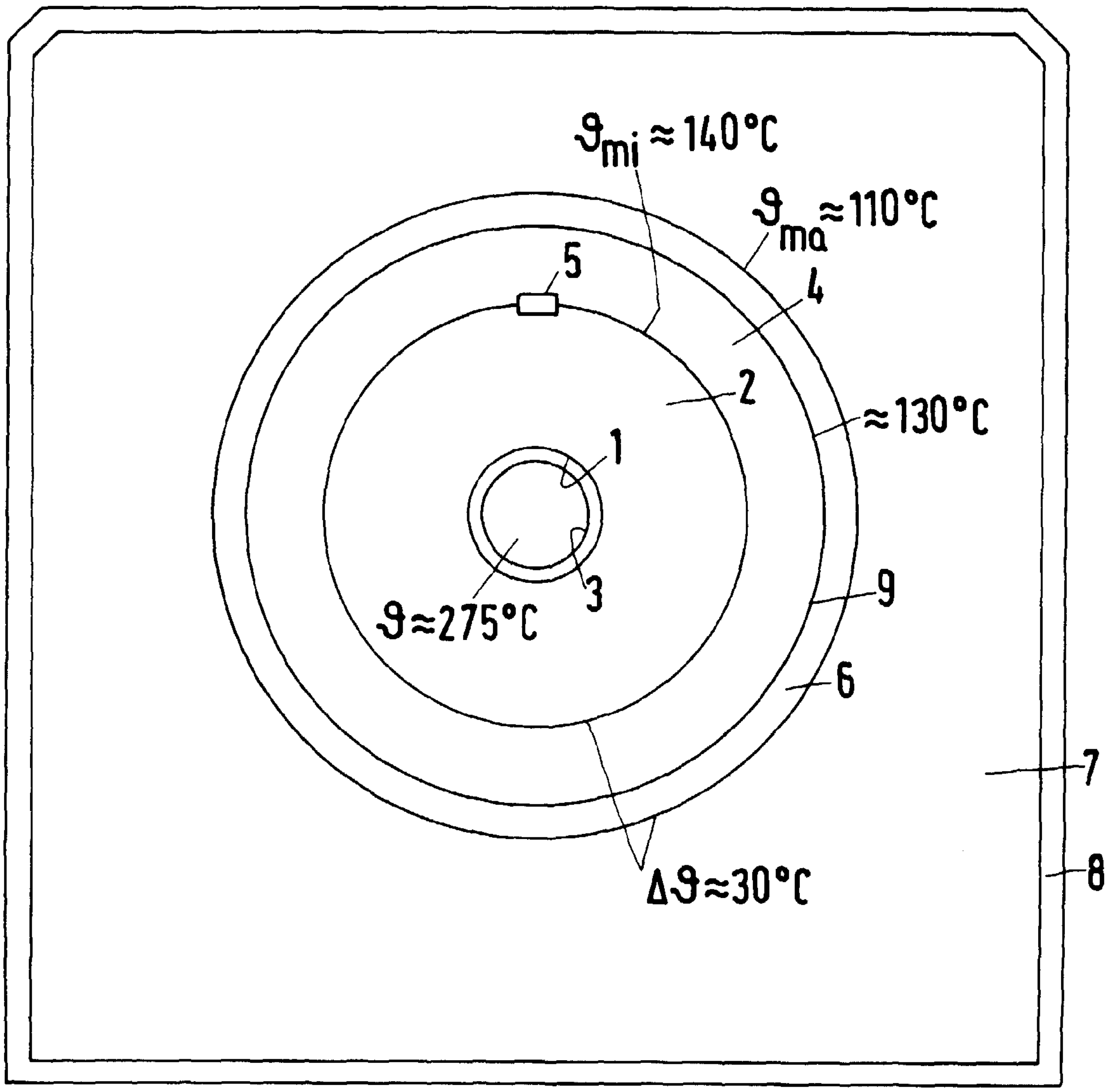

$\vartheta_{mi} \approx 140°C$
$\vartheta_{ma} \approx 110°C$
5
4
2
≈130°C
1
3
$\vartheta \approx 275°C$
9
6
7
8
$\Delta\vartheta \approx 30°C$

Fig.2

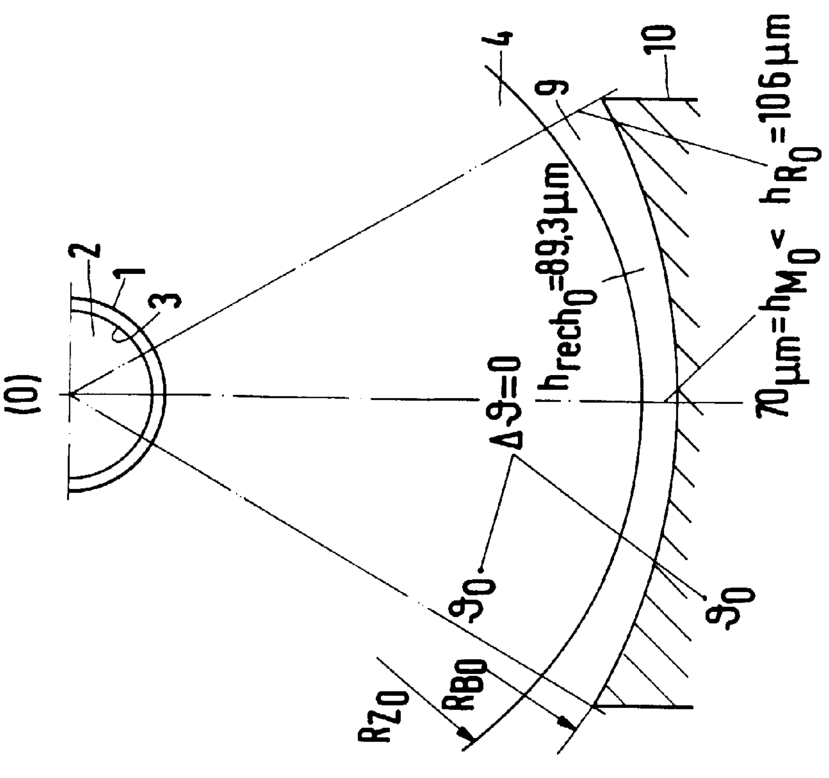
(0)
2
1
3
Δϑ=0
$h_{rech_0}$=89,3µm
4
9
10
$h_{R_0}$=106µm
70µm=$h_{M_0}$ <
$ϑ_0$
$ϑ_0$
$R_{Z0}$
$R_{B0}$

Fig.3

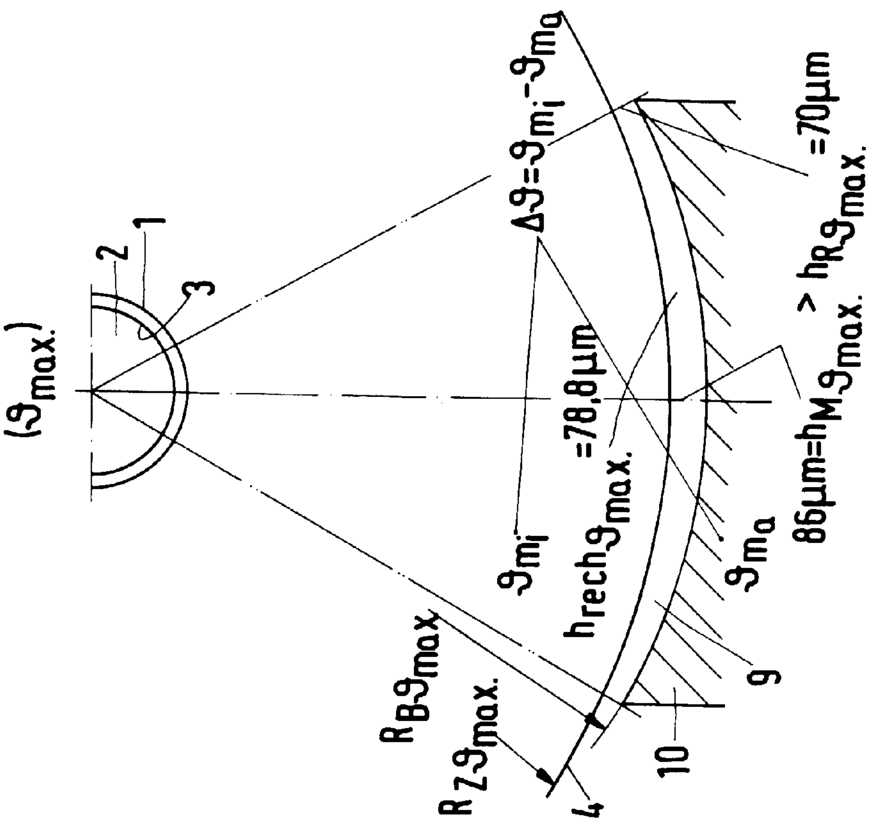
($ϑ_{max.}$)
2
1
3
Δϑ=$ϑ_{mi}$-$ϑ_{ma}$
=70µm
$h_{Rϑ_{max.}}$
86µm=$h_{Mϑ_{max.}}$ > $h_{Rϑ_{max.}}$
=78,8µm
$h_{rechϑ_{max.}}$
$ϑ_{mi}$
$ϑ_{ma}$
9
10
4
$R_{Bϑ_{max}}$
$R_{Zϑ_{max.}}$

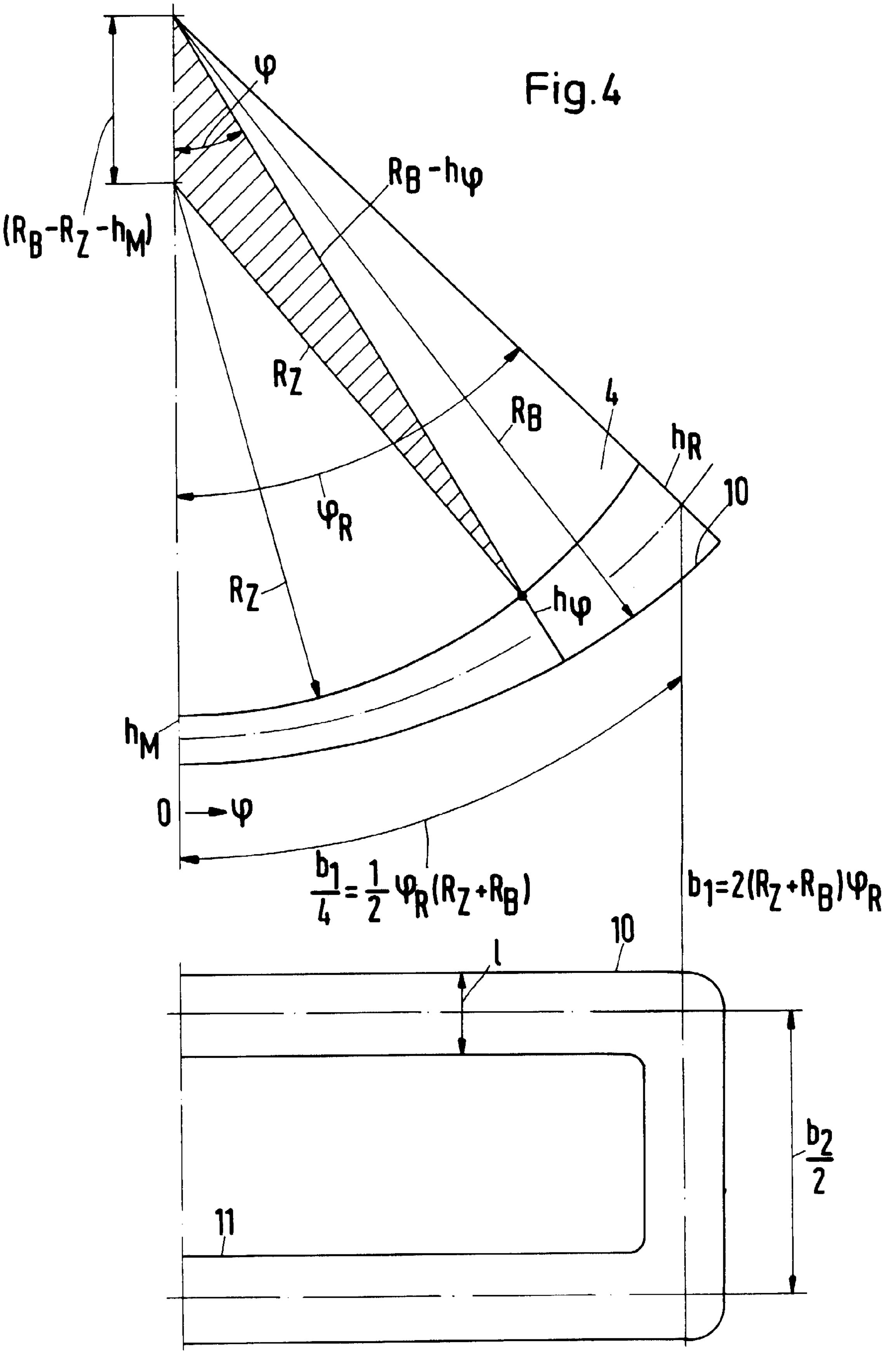
φ
Fig.4
$R_B - h_\varphi$
$(R_B - R_Z - h_M)$
$R_Z$
$R_B$
4
$h_R$
10
$\varphi_R$
$R_Z$
$h_\varphi$
$h_M$
0 → φ
$\frac{b_1}{4} = \frac{1}{2}\varphi_R(R_Z + R_B)$
$b_1 = 2(R_Z + R_B)\varphi_R$
10
l
$\frac{b_2}{2}$
11

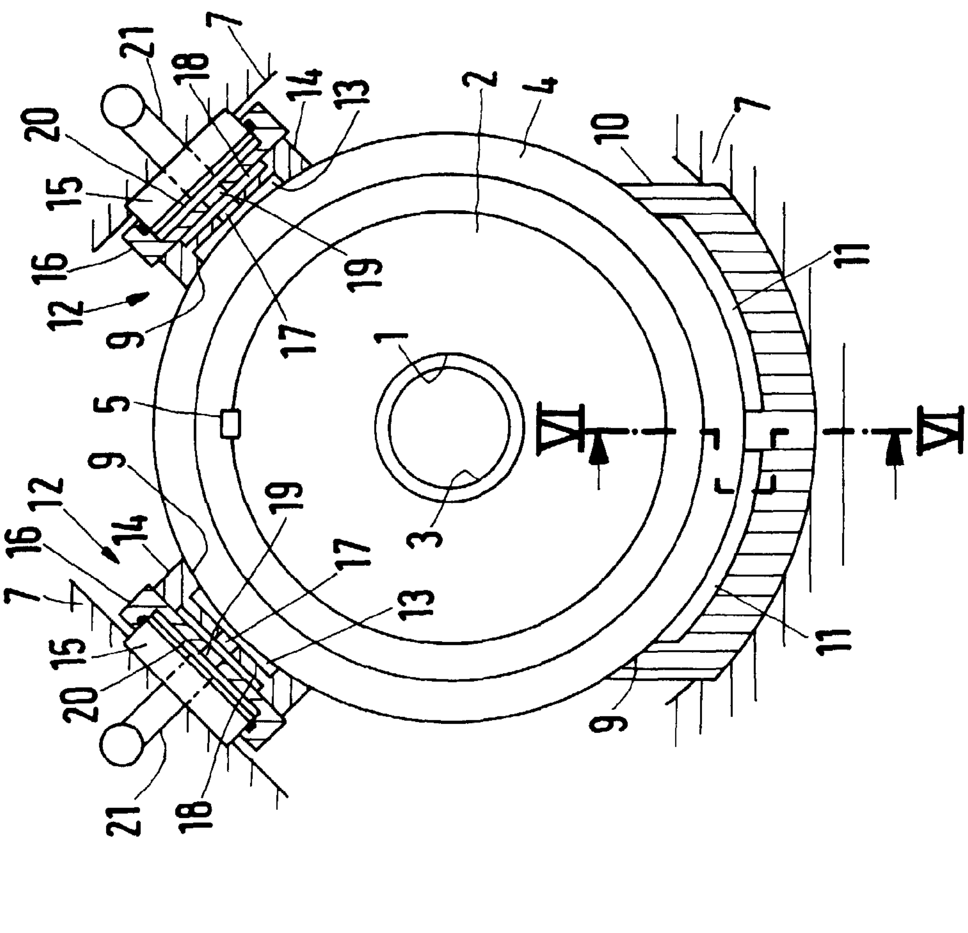

Fig.5

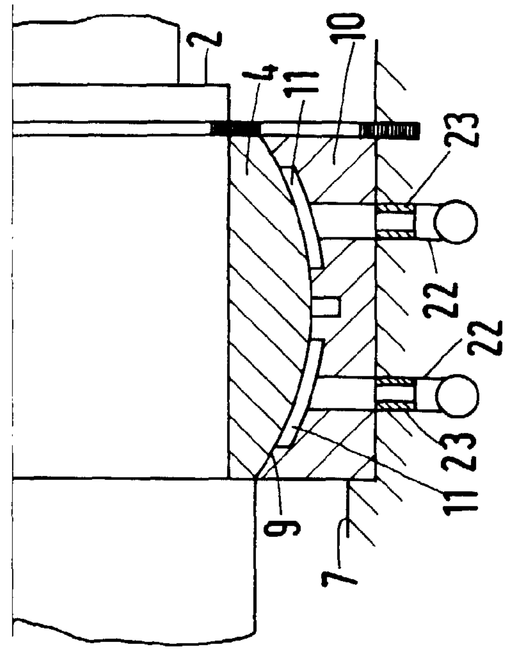

Fig.6

Fig.8

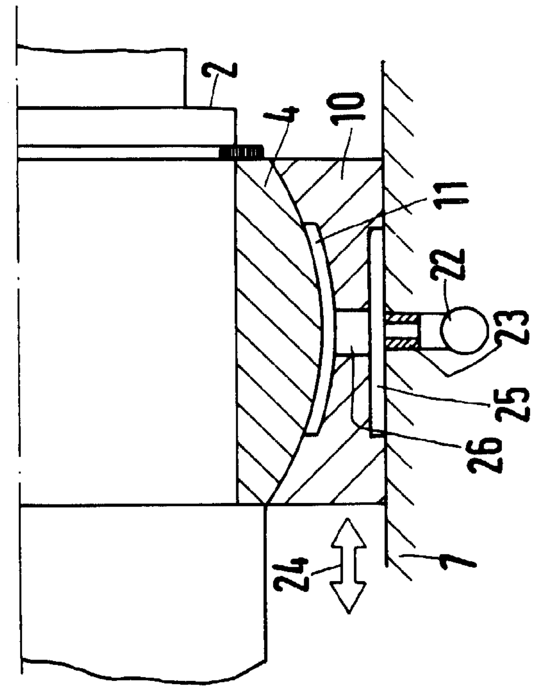

Fig.7